# EUROPÄISCHE PATENTSCHRIFT

(11) **EP 2 081 785 B1**
(45) Veröffentlichungstag und Bekanntmachung des Hinweises auf die Patenterteilung: **18.12.2013**
(21) Anmeldenummer: 07784594.9
(22) Anmeldetag: 26.07.2007
(51) Int. Cl.: B60J 1/20, B64C 1/14

(54) **MODULARES FLUGZEUGFENSTER**
MODULAR AIRPLANE CABIN WINDOW
FENETRE MODULAIRE D'AVION

(30) Priorität: 25.10.2006 AT 18042006
(43) Veröffentlichungstag der Anmeldung: 29.07.2009
(73) Patentinhaber: FACC AG, 4910 Ried im Innkreis (AT)
(72) Erfinder: STEINER, Gottfried, 8724 Spielberg (AT); STAUBMANN, Mario, 8724 Spielberg (AT)
(74) Vertreter: Sonn & Partner Patentanwälte
(86) Internationale Anmeldenummer: PCT/AT2007/000365
(87) Internationale Veröffentlichungsnummer: WO 2008/049138

(56) Entgegenhaltungen:
- EP-A1- 0 342 355
- DE-U1- 8 331 001
- US-A- 4 998 576
- US-A1- 2004 262 453
- US-B1- 6 745 810

## Beschreibung

Die Erfindung betrifft ein modulares Flugzeugfenster mit einer äußeren und einer inneren.Scheibe, welche in im Wesentlichen rechteckigen Rahmen eingesetzt sind, mit einer an einem der Rahmen angeordneten faltbaren Beschattung, welche ein freies bewegbares Ende aufweist, das mit einer zum Öffnen und Schließen der Beschattung vorgesehenen Betätigungseinheit gekoppelt ist, welche zumindest einen in einem der Längsteile des Rahmens angeordneten Hebe- und Senkmechanismus für die Beschattung und einen im unteren Querteil des Rahmens gelagerten Antriebsmechanismus mit einer Gewindespindel aufweist.

Ein modulares Flugzeugfenster der eingangs genannten Art ist aus der US 4,998,576 A, welche den nächstligenden Stand der Tecknik darstellt und den Oberbegriff des Anspruchs 1 offenbart, und der US 6 745 810 B1 bekannt. Der Antriebsmechanismus zum Öffnen und Schließen der Beschattung weist eine mit einem Außengewinde versehene Gewindespindel auf, welche am unteren Querteil des Rahmens für die äußere Scheibe gelagert ist und die bei der Betätigung des Mechanismus in Rotation versetzt wird, wodurch ein Antriebsrad in Bewegung gesetzt wird, welches einen Zahnriemen antreibt, der mit der Beschattung in Verbindung ist. Die Drehung der Gewindespindel wird insbesondere mittels eines mit einem Innengewinde versehenen Kupplungsteils, welcher auf der Gewindespindel sitzt, durchgeführt.

Der Erfindung liegt die Aufgabe zu Grunde, bei einem Flugzeugfenster der eingangs genannten Art den Antriebsmechanismus für die Beschattung bei einfachem Aufbau stabil und langlebig auszuführen und eine komfortable Betätigung der Beschattung mit möglichst geringem Kraftaufwand zu gewährleisten.

Gelöst wird die gestellte Aufgabe erfindungsgemäß dadurch, dass die Gewindespindel lediglich translatorisch bewegbar ist und mit einem Übertragungsmechanismus gekoppelt ist, welcher den zumindest einen Hebe- und Senkmechanismus betätigt.

Die Erfindung zeichnet sich in Folge der translatorischen Bewegung der Gewindespindel und deren Koppelung mit einem Übertragungsmechanismus durch eine besonders hohe Stabilität und durch eine langlebige Konstruktion aus. Der Übertragungsmechanismus eröffnet die Möglichkeit, den zur Betätigung erforderlichen Kraftaufwand ausgesprochen gering zu halten.

Gemäß einer bevorzugten Ausführungsform der Erfindung ist in jedem Längsteil des Rahmens ein Hebe- und Senkmechanismus angeordnet, wobei der Übertragungsmechanismus beide Hebe- und Senkmechanismen gleichzeitig betätigt. Mit dieser Maßnahme ist vorteilhafter Weise eine sehr gleichmäßige Kraftübertragung verbunden und es sind gesonderte Mechanismen, die das untere Ende der Beschattung in der Waagrechten halten, nicht erforderlich.

Die Konstruktion des Antriebsmechanismus ist besonders stabil, wenn der Übertragungsmechanismus eine parallel zur Gewindespindel verlaufende Übertragungsstange aufweist, die mit Antriebsrädern der Hebe- und Senkmechanismen fest verbunden ist.

Bei einer bevorzugten Ausführungsvariante der Erfindung ist zwischen der Gewindespindel und der Übertragungsstange ein Getriebe, insbesondere in der Art eines einstufigen Stirnradgetriebes, vorgesehen. Diese Maßnahme erlaubt die Einstellung einer für die Betätigung günstigen Kraftübertragung.

Besonders einfach und platzsparend lässt sich dieses Getriebe dadurch ausführen, dass ein von der Gewindespindel betätigbares Zahnrad und ein mit der Übertragungsstange fest verbundenes Zahnrad vorgesehen sind.

Für die Langlebigkeit des Getriebes ist es von Vorteil, wenn das von der Gewindespindel betätigbare Zahnrad an einem gegenüber dem Rahmen feststehenden Lagergehäuse drehbar gelagert ist.

Bei einer weiteren Ausführungsvariante der Erfindung, die besonders kompakt und platzsparend ausgeführt ist, sind die Gewindespindel und die Übertragungsstange koaxial angeordnet. Dabei ist es von Vorteil, wenn die Gewindespindel als Hohlspindel ausgeführt ist, durch welche die Übertragungsstange verläuft.

Bei dieser Ausführungsvariante ist auch der Übertragungsmechanismus besonders einfach und kompakt ausgeführt, wenn koaxial zur Übertragungsstange eine Hülse angeordnet ist, welche mit der Stange fest verbunden ist und welche einen Gewindeabschnitt aufweist, der mit dem Gewinde der Gewindespindel in Eingriff steht.

Zur Betätigung der Gewindespindel von Hand aus ist lediglich erforderlich, ein mit der Gewindespindel fest verbundenes Griffelement vorzusehen.

Zur Stabilisierung der Gewindespindel während der Betätigung durch das Griffelement kann es von Vorteil sein, wenn das Griffelement an einem Schlitzen angeordnet ist, welcher am Rahmen verschiebbar gelagert ist.

Eine alternative Betätigung der Gewindespindel, die besonders komfortabel ist, sieht vor, dass die Gewindespindel mittels eines steuerbaren Antriebes, beispielsweise eines Elektromotors, bewegbar ist.

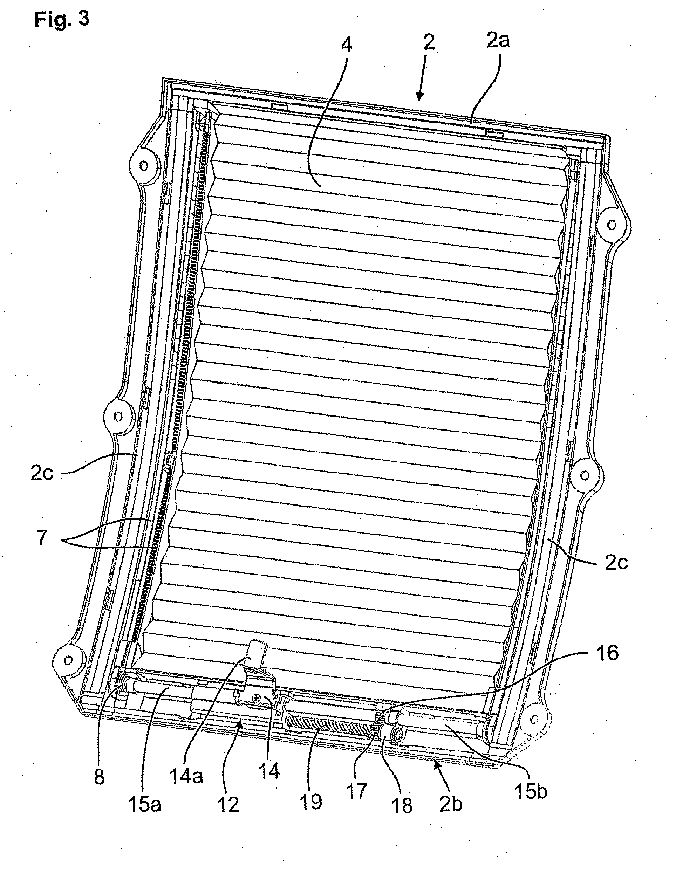

Weitere Merkmale, Vorteile und Einzelheiten der Erfindung werden anhand der Zeichnung, die in Fig. 1 bis Fig. 7 und in Fig. 8 bis 14 jeweils ein Ausführungsbeispiel darstellt, näher beschrieben., Dabei zeigen
Fig. 1 eine Explosionsdarstellung der Bestandteile einer Ausführungsform eines erfindungsgemäß ausgeführten, modular aufgebauten Flugzeugfensters,
Fig. 2 eine Ansicht einer Betätigungseinheit mitsamt einer zugehörigen, zusammenfaltbaren Beschattung,
Fig. 3 die mit der Beschattung in einem Rahmen eingesetzte Betätigungseinheit,
Fig. 4 die Vorderseite eines Antriebsmechanismus,
Fig. 5 die Rückseite eines Antriebsmechanismus,
Fig. 6 ein Detail der Fig. 4 in Schrägansicht,
Fig. 7 einen Längsschnitt durch den Antriebsmechanismus gemäß Fig. 5,
Fig. 8 eine Explosionsdarstellung der Bestandteile einer weiteren Ausführungsform eines erfindungsgemäß ausgeführten, modular aufgebauten Flugzeugfensters,
Fig. 9 eine Ansicht einer Betätigungseinheit mitsamt einer zugehörigen, zusammenfaltbaren Beschattung,
Fig. 10 die mit der Beschattung in einen Rahmen eingesetzte Betätigungseinheit,
Fig. 11 die Vorderseite eines Antriebsmechanismus,
Fig. 12 die Rückseite eines Antriebsmechanismus,
Fig. 13 ein Detail der Fig. 11 in Schrägansicht, und
Fig. 14 einen Längsschnitt durch den Antriebsmechanismus gemäß Fig. 12.

In der nachfolgenden Beschreibung beziehen sich die Begriffe "oben", "unten", "vertikal" und "horizontal" auf die Einbauposition des Flugzeugfensters, ferner sind mit Vorderseite oder Innenseite die dem Flugzeuginnenraum zugewandte und mit Rückseite oder Außenseite die vom Flugzeuginnenraum abgewandte Seite eines Bauteils bezeichnet.

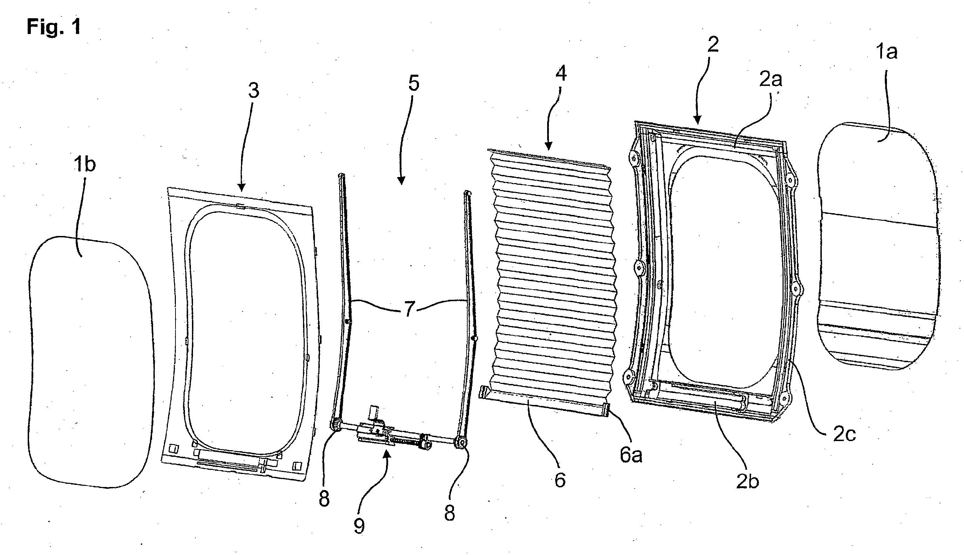

Fig. 1 zeigt ein im Wesentlichen rechteckförmiges, sich in vertikaler Richtung erstreckendes, modular aufgebautes Flugzeugfenster bestehend aus einer äußeren Scheibe 1a, welche in einen Rahmen 2 eingesetzt ist, einer inneren Scheibe 1b, welche in einen Rahmen 3 eingesetzt ist, einer faltbaren Beschattung 4, welche insbesondere in der Art eines zusammenfaltbaren Rollos ausgeführt ist, sowie einer Betätigungseinheit 5. Der Rahmen 2 besteht aus zwei Längsteilen 2c, einem oberen Querteil 2a und einem unteren Querteil 2b, wobei Längs- und Querteile 2a, 2b, 2c an der Innenseite des Rahmens 2 ein Gehäuse zur Aufnahme der Betätigungseinheit 5 und der Beschattung 4 bilden.

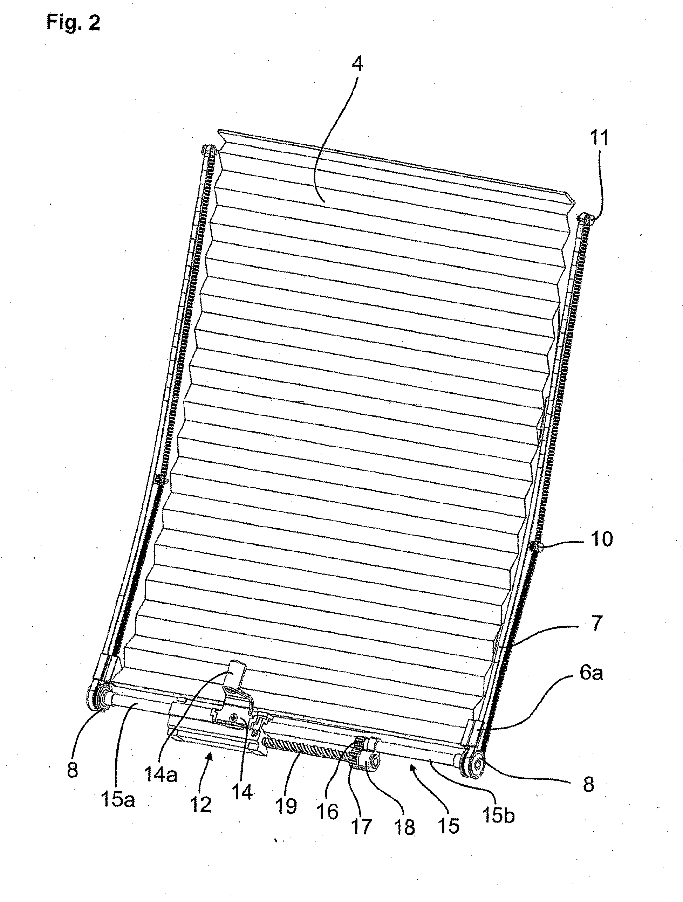

Die Beschattung 4 wird gemeinsam mit der Betätigungseinheit 5 an der Innenseite des Rahmens 2 positioniert und ist in vertikaler Richtung von einer komplett zusammengefalteten Lage am oberen Querteil 2a des Rahmens 5 in eine den Rahmen 2 komplett bedeckende Lage und vice versa bringbar. Das obere Ende der Beschattung 4 ist im oberen Querteil 2a des Rahmens 2 befestigt. Das untere freie und bewegliche Ende der Beschattung 4 ist mit einer Adapterleiste 6 versehen, deren seitliche Enden jeweils an einem in vertikaler Richtung seitlich der Beschattung 4 in den Längsteilen 2c endlos geführten Zahnriemen 7 befestigt sind, beispielsweise wie Fig. 2 zeigt, mit Klemmteilen 6a festgeklemmt sind. Jeder Zahnriemen 7 umläuft ein gezahntes Antriebsrad 8, welches mit einem Antriebsmechanismus 9 gekoppelt ist, der im unteren Querteil 2b des Rahmens 2 untergebracht ist. Jeder Zahnriemen 7 umläuft ferner eine freilaufende, am Längsteil 2c gelagerte, gezahnte Führungsrolle 10 und eine am oberen Ende des Längsteils 2c des Rahmens 2 drehbar gelagerte, gezahnte Umlenkrolle 11. Die Antriebsräder 8, die Zahnriemen 7 und die Rollen 10, 11 bilden die Bestandteile der Hebe- und Senkmechanismen für die Beschattung 4.

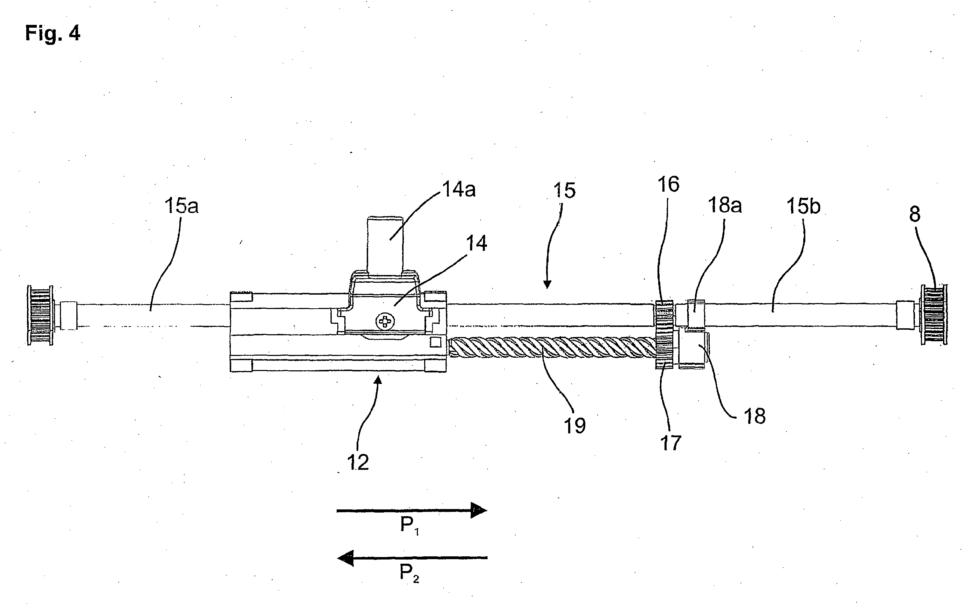

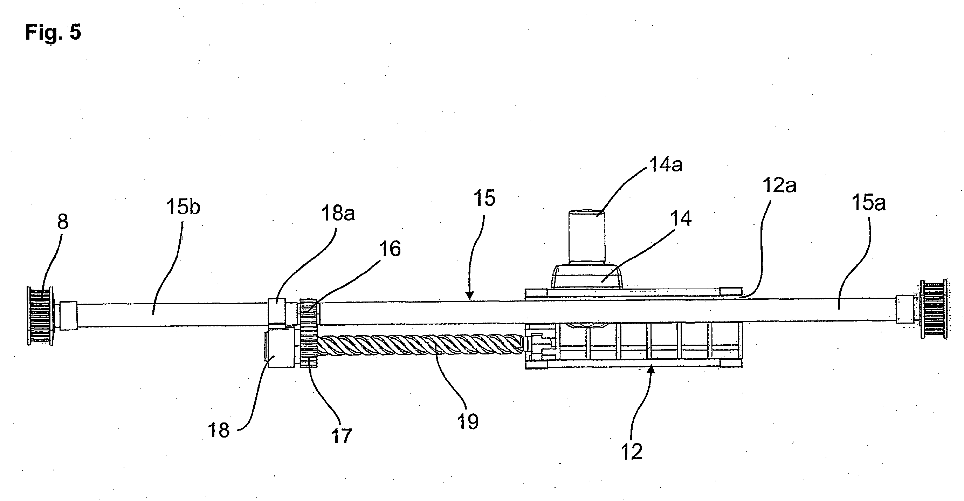

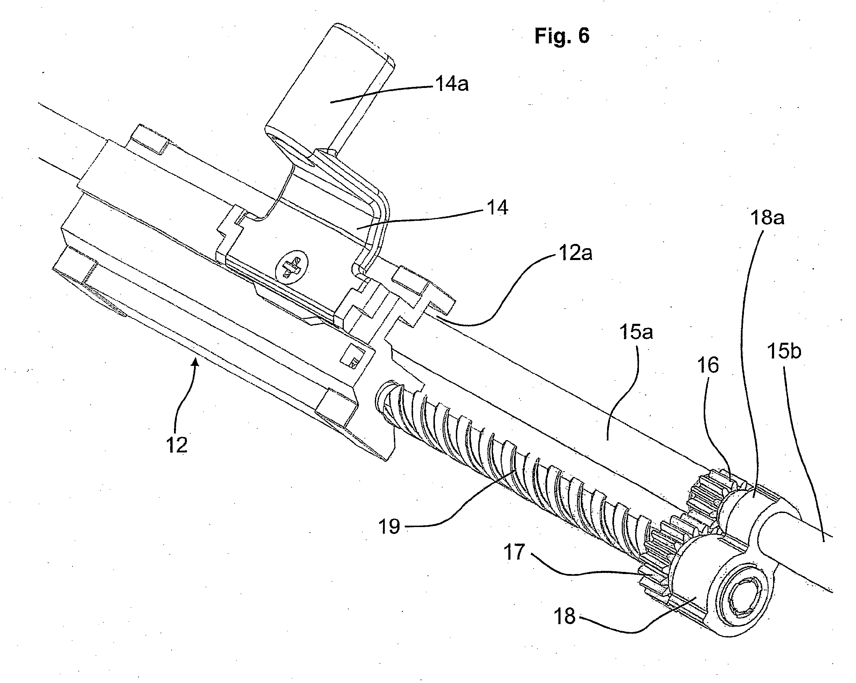

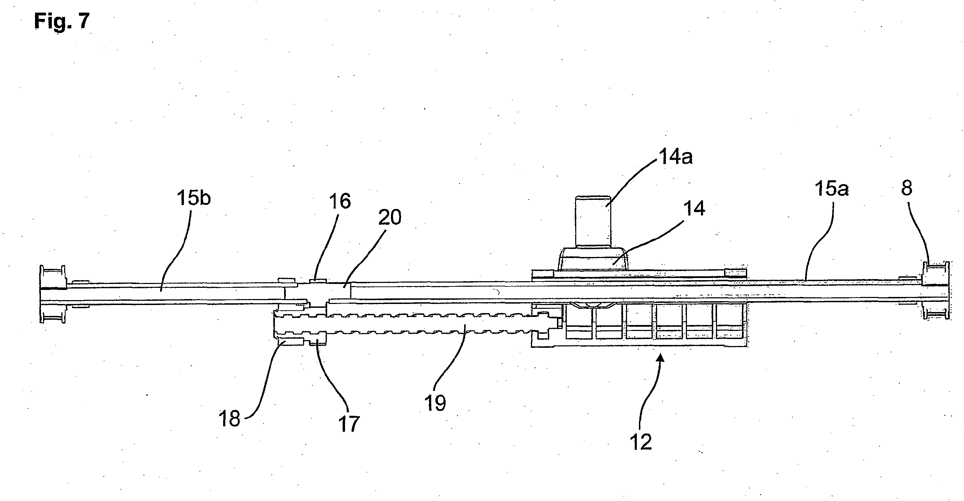

Fig. 4, 5 und 6 zeigen die Bestandteile des Antriebsmechanismus 9, welcher einen in einer Ausnehmung des unteren Querteils 2b des Rahmens 2 in horizontaler Richtung verschiebbar gelagerten Schlitten 12 aufweist. Am Schlitten 12 ist ein Griffelement 14 angeordnet, beispielsweise angeschraubt, welches ein Griffstück 14a aufweist, das an der Fensterinnenseite nach außen, in den Passagierraum, ragt. An seiner Rückseite ist der Schlitten 12 in horizontaler Richtung mit einer Ausnehmung bzw. Freistellung 12a (siehe Fig. 6) versehen, in welcher ein Übertragungsstangenteil 15a verläuft, dessen eines Ende mit dem einen, in den Zeichnungsfiguren linken Zahnrad 8 fest verbunden ist. Das zweite Ende des Übertragungsstangenteils 15a ist an einem Zwischenstück 20 (siehe Fig.7) befestigt, welches ein Zahnrad 16 trägt. An der anderen Seite des Zwischenstückes 20 ist ein mit dem Stangenteil 15a fluchtend angeordneter zweiter Übertragungsstangenteil 15b befestigt, welcher mit dem zweiten, in den Zeichnungsfiguren rechten Zahnrad 8 fest verbunden ist. Die Übertragungsstangenteile 15a, 15b wirken wie eine einzige, das Zahnrad 16 tragende Stange 15. Mit dem Zahnrad 16 kämmt ein zweites, im Durchmesser größeres Zahnrad 17, welches an einem Lagergehäuse 18 drehbar gelagert ist, welches im Querteil 2b des Rahmen 2 gehalten, beispielsweise eingeklemmt ist. Das Lagergehäuse 18 verfügt über einen Ansatz 18a, welcher von dem Übertragungsstangenteil 15a durchsetzt ist, wobei der Stangenteil 15a-gegenüber dem Lagergehäuse 18 frei drehbar ist.

Das Zahnrad 17 ist mittels, einer Gewindespindel 19, die parallel zu den Stangen 15a, 15b verläuft, in Drehbewegung versetzbar. Die Gewindespindel 19 ist am Schlitten 12 befestigt und gemeinsam mit diesem lediglich translatorisch, in horizontaler Richtung, bewegbar. Das Außengewinde der Gewindespindel 19 greift in ein entsprechendes Innengewinde im Zahnrad 17, wie es in Fig. 7 gezeigt ist. Die beiden Zahnräder 16, 17 bilden somit ein Getriebe in der Art eines einstufigen Stirnradgetriebes.

Fig. 2, 4 und 5 zeigen die Betätigungseinheit 5 bei abgesenkter Beschattung 4. Durch Ergreifen des Griffstückes 14a kann der Schlitten 12 in Richtung des Pfeiles P1 (Fig.4) verschoben werden, wobei über die Gewindespindel 19 das Zahnrad 17 in eine Drehbewegung versetzt wird, die auf das Zahnrad 16 und damit auf die Übertragungsstange 15 übertragen wird. Die Übertragungsstange 15 bzw. deren Teile 15a, 15b setzen die beiden Zahnräder 8 in Drehbewegung, sodass die Zahnriemen 7 bewegt werden. Die Beschattung 4 bewegt sich unter Zusammenfalten nach oben. Werden anschließend der Schlitten 12 und damit die Gewindespindel 19 in die entgegen gesetzte Richtung (Pfeil P2 in Fig. 4) bewegt, erfolgt ein Schließen der Beschattung 4. Durch entsprechende Auslegung und Anordnung der einzelnen Bauteile können selbstverständlich die Betätigungsrichtungen (Pfeil P1, P2) auch umgekehrt sein.

Die einzelnen zusammenwirkenden Bestandteile sind derart aufeinander abgestimmt, dass der zur Verfügung stehende Bewegungsweg des Schlittens 12 bzw. der Gewindespindel 19 gewährleistet, dass die Beschattung 4 in ihre komplett offene, zusammengefaltete Stellung und vice versa gebracht wird. Selbstverständlich ist es möglich, die Beschattung 4 in eine beliebige Zwischenstellung zu bringen.

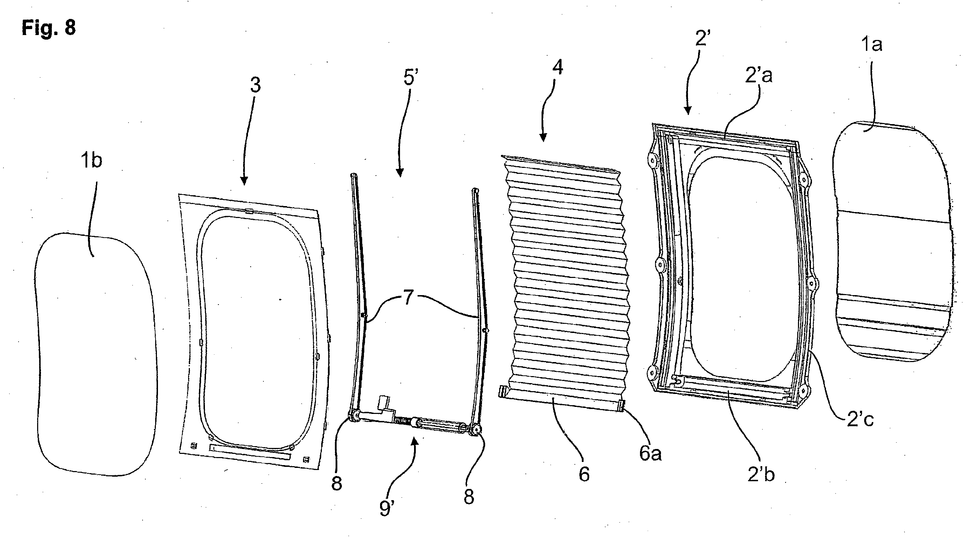

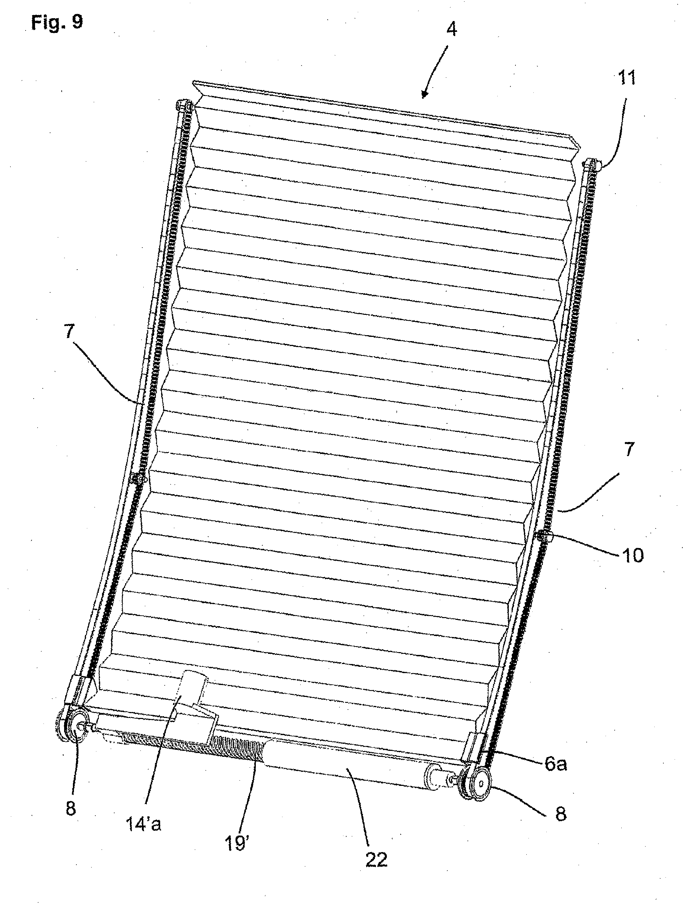

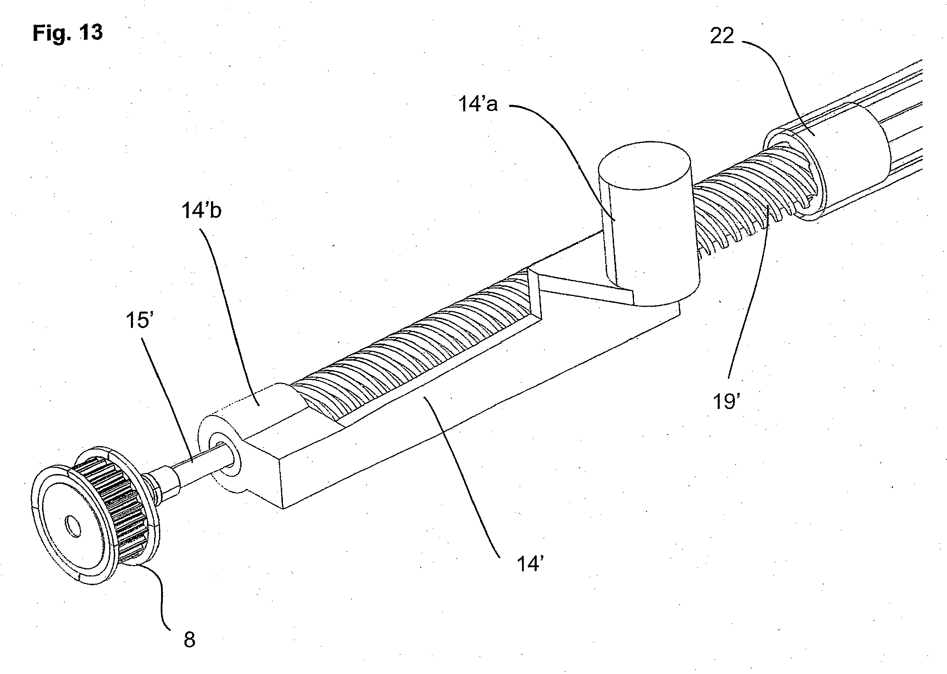

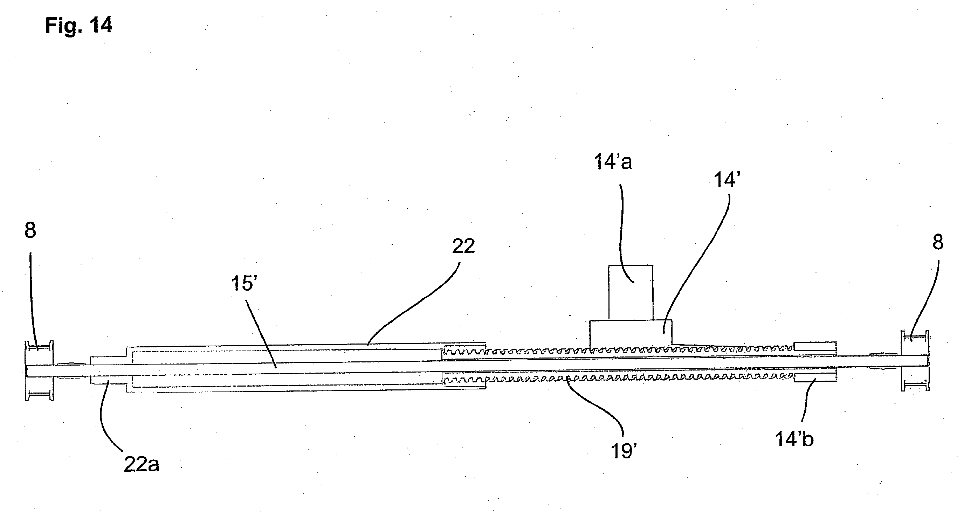

Fig. 8 bis Fig. 14 zeigen eine weitere Ausführungsform der Erfindung. Fig. 8 zeigt die einzelnen Bestandteile des Flugzeugfensters analog zu Fig. 1. Die Ausführung der äußeren Scheibe 1a, der inneren Scheibe 1b, des Rahmens 3, der Beschattung 4, der Zahnriemen 7, deren Lagerung an Antriebsrädern 8, der Führungsrollen 10 und Umlenkrollen 11 entsprechen der ersten Ausführungsform. Abweichend zur ersten Ausführungsvariante sind der zur Betätigungseinheit 5' gehörende Antriebsmechanismus 9' für die mit den Zahnriemen 7 verbundene, faltbare Beschattung 4 sowie der Rahmen 2' ausgeführt.

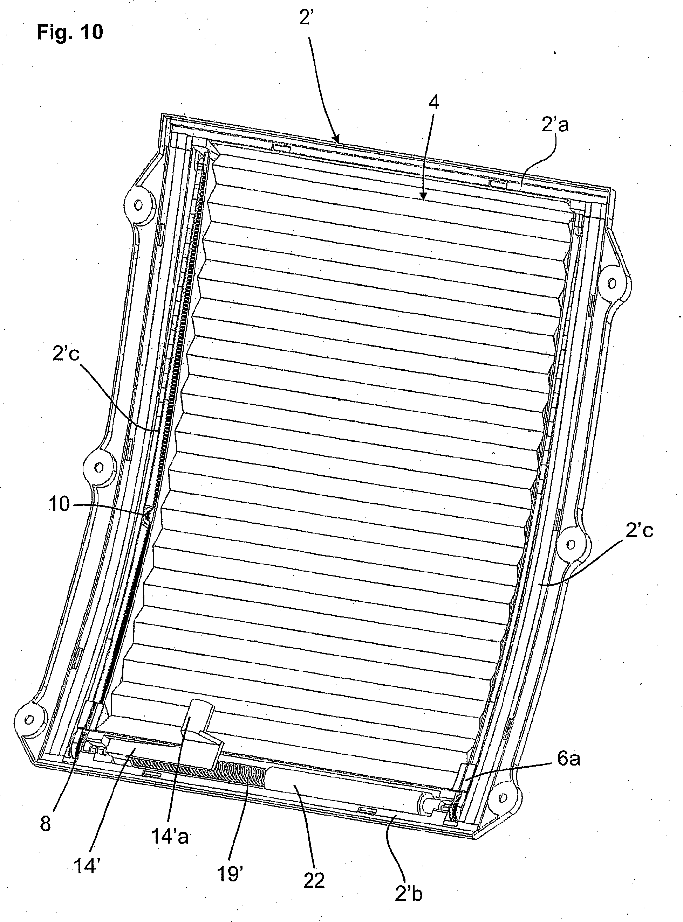

Fig. 8 und Fig. 10 zeigen den Rahmen 2' mit dem oberen Querteil 2'a, an welchem die Beschattung 4 befestigt ist, dem unteren Querteil 2'c, in welchem der Antriebsmechanismus 9' gelagert ist, und den beiden Längsteilen 2'c, welche die Hebe- und Senkmechanismen mit den Rädern 8, den Rollen 10, 11 und den Zahnriemen 7 aufnehmen.

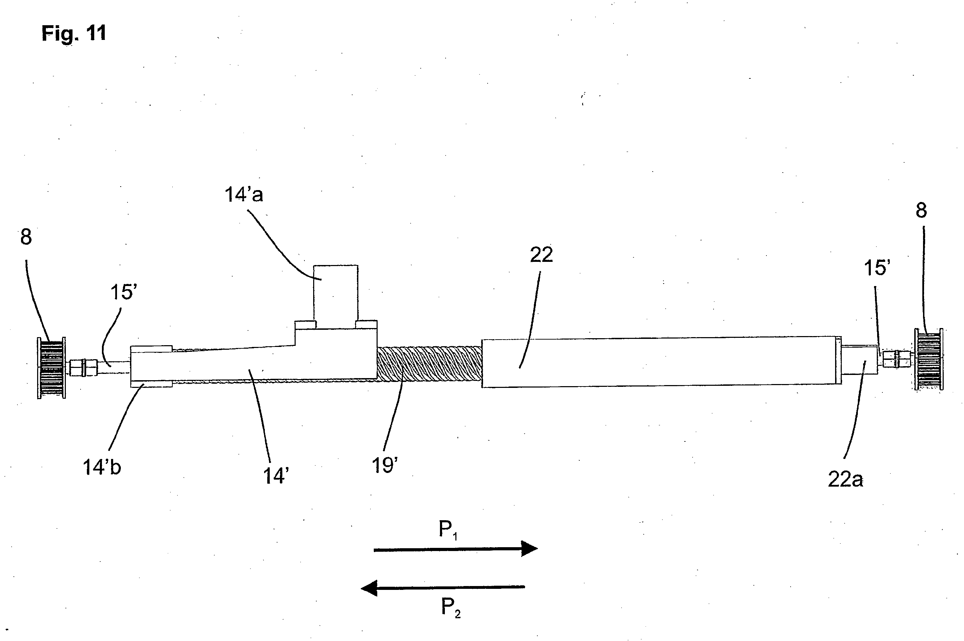

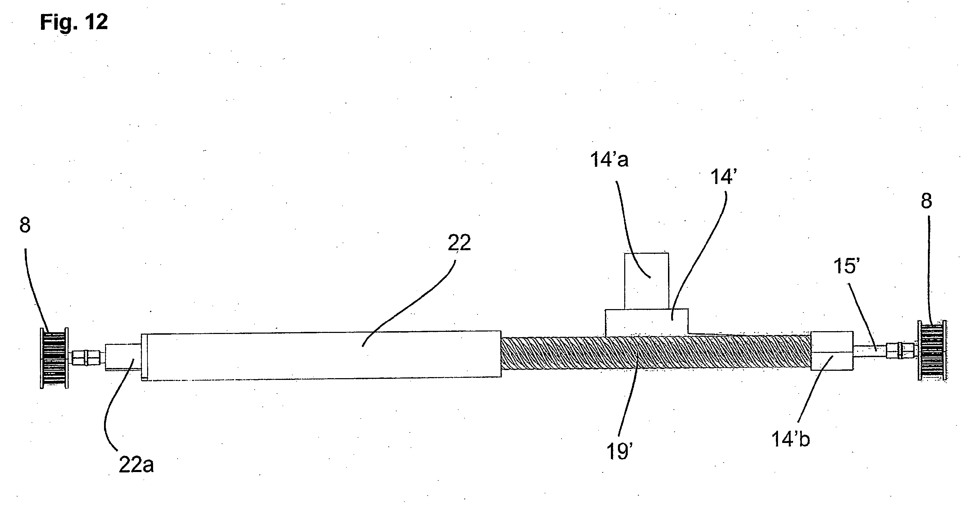

Fig. 11 bis 14 zeigen den Antriebsmechanismus 9' mit einer relativ zum Querteil 2'b des Rahmens 2' in horizontaler Richtung beweglich gelagerten Gewindespindel 19', welche mit einem ein Griffstück 14'a tragenden Griffelement 14' fest verbunden ist. Dazu weist das Griffelement 14' einen etwa zylindrisch ausgeführten Lagerteil 14'b auf, welcher an dem einen Ende der Gewindespindel 19' fixiert ist. Die Gewindespindel 19' ist als Hohlspindel ausgeführt und ist von einer Übertragungsstange 15' durchlaufen, deren Enden mit den Antriebsräder 8 fest verbunden sind. Eine an ihrem einen Endabschnitt mit einem Innengewinde versehene Übertragungshülse 22 sitzt auf einem Abschnitt des Außengewindes der Gewindespindel 19'. In der in den Zeichnungsfiguren (siehe Fig. 12 bis Fig. 14) gezeigten Ausgangslage mit herab gelassener Beschattung 4 sitzt der mit dem Innengewinde versehene Endabschnitt der Übertragungshülse 22 an dem dem Lagerteil 14'b abgewandten Endabschnitt der Gewindespindel 19'. Die Hülse 22 erstreckt sich koaxial zur und auf der Übertragungsstange 15' und ist mit ihrem zweiten Endabschnitt vor dem betreffenden Antriebsrad 8 über einen Hülsenteil 22a mit der Übertragungsstange 15' fest verbunden. Die Übertragungsstange 15' ist, bis auf den Hülsenteil 22a, über ihre Erstreckung weder mit der Hülse 22 noch mit der Spindel 19' in Kontakt.

Durch Ergreifen des Griffstückes 14'a lässt sich die Gewindespindel 19' in Richtung des Pfeils P1 ( Fig. 11) verschieben und versetzt die Übertragungshülse 22 und damit die Übertragungsstange 15' und über diese die beiden Antriebsräder 8 in Rotation, sodass sich die Beschattung 4 unter Zusammenfalten anhebt. Wird anschließend die Gewindespindel 19' in die entgegen gesetzte Richtung, in Richtung des Pfeiles P2 (Fig. 11) bewegt, kehrt sich die Bewegung der Beschattung 4 um, diese wird in Richtung ihrer geschlossenen Stellung bewegt. Auch bei dieser Ausführungsvariante sind sämtliche Zwischenstellungen für die Beschattung 4 möglich.

Die Erfindung ist auf die dargestellten Ausführungsvarianten nicht eingeschränkt. So kann das Getriebe zur Übertragung der Antriebskraft der Spindel auf die Übertragungsstange abweichend ausgeführt werden. Möglich ist auch ein Antrieb der Gewindespindel mittels eines steuerbaren Antriebes, beispielsweise eines Elektromotors.

Es kann ferner vorgesehen sein, lediglich einen Hebe- und Senkmechanismus und zusätzlich einen gesonderten Mechanismus vorzusehen, welcher das freie Ende der Beschattung in der Waagrechten hält.

## Patentansprüche

1. Modulares Flugzeugfenster mit einer äußeren und einer inneren Scheibe (1a, 1b), welche in im Wesentlichen rechteckigen Rahmen (2, 2', 3) eingesetzt sind, mit einer an einem der Rahmen (2, 2') angeordneten faltbaren Beschattung (4), welche ein freies bewegbares Ende aufweist, das mit einer zum Öffnen und Schließen der Beschattung (4) vorgesehenen Betätigungseinheit (5, 5') gekoppelt ist, welche zumindest einen, in einem der Längsteile (2c, 2'c) des Rahmens (2, 2') angeordneten Hebe- und Senkmechanismus für die Beschattung (4) und einen im unteren Querteil (2b, 2'b) des Rahmens (2, 2') gelagerten Antriebsmechanismus (9, 9') mit einer Gewindespindel (19, 19') aufweist, **dadurch gekennzeichnet, dass** die Gewindespindel (19, 19') lediglich translatorisch bewegbar und mit einem Übertragungsmechanismus gekoppelt ist, welcher den zumindest einen Hebe- und Senkmechanismus betätigt.

2. Flugzeugfenster nach Anspruch 1, **dadurch gekennzeichnet, dass** in jedem Längsteil (2c, 2'c) des Rahmens (2, 2') ein Hebe- und Senkmechanismus angeordnet ist, wobei der Übertragungsmechanismus beide Hebe- und Senkmechanismen gleichzeitig betätigt.

3. Flugzeugfenster nach Anspruch 1 oder 2, **dadurch gekennzeichnet, dass** der Übertragungsmechanismus eine parallel zur Gewindespindel (19, 19') verlaufende Übertragungsstange (15, 15') aufweist, die mit Antriebsrädern (8) der Hebe- und Senkmechanismen fest verbunden ist.

4. Flugzeugfenster nach Anspruch 3, **dadurch gekennzeichnet, dass** zwischen der Gewindespindel (19) und der Übertragungsstange (15) ein Getriebe, insbesondere in der Art eines einstufigen Stirnradgetriebes, vorgesehen ist.

5. Flugzeugfenster nach Anspruch 4, **dadurch gekennzeichnet, dass** das Getriebe ein von der Gewindespindel (19) betätigbares Zahnrad (17) und ein mit der Übertragungsstange (15) fest verbundenes Zahnrad (16) aufweist.

6. Flugzeugfenster nach Anspruch 5, **dadurch gekennzeichnet, dass** das von der Gewindespindel (19) betätigtbare Zahnrad (17) des Getriebes an einem gegenüber dem Rahmen (2) feststehenden Lagergehäuse (18) drehbar gelagert ist.

7. Flugzeugfenster nach Anspruch 3, **dadurch gekennzeichnet, dass** die Gewindespindel (19') und die Übertragungsstange (15') koaxial angeordnet sind.

8. Flugzeugfenster nach Anspruch 7, **dadurch gekennzeichnet, dass** die Gewindespindel (19') als Hohlspindel ausgeführt ist, durch welche die Übertragungsstange (15') verläuft.

9. Flugzeugfenster nach Anspruch 7 oder 8, **dadurch gekennzeichnet, dass** koaxial zur Übertragungsstange (15') eine Hülse (22) angeordnet ist, welche mit der Stange (15') fest verbunden ist und welche einen Gewindeabschnitt aufweist, der mit dem Gewinde der Gewindespindel (19') in Eingriff steht.

10. Flugzeugfenster nach einem der Ansprüche 1 bis 8, **dadurch gekennzeichnet, dass** mit der Gewindespindel (19, 19') ein Griffelement (14, 14') fest verbunden ist.

11. Flugzeugfenster nach Anspruch 10, **dadurch gekennzeichnet, dass** das Griffelement (14) an einem Schlitten (12) angeordnet ist, welcher am Rahmen (2) verschiebbar gelagert ist.

12. Flugzeugfenster nach einem der Ansprüche 1 bis 9, **dadurch gekennzeichnet, dass** die Gewindespindel (19, 19') mittels eines steuerbaren Antriebes, beispielsweise eines Elektromotors, bewegbar ist.

## Claims

1. A modular aircraft window including an outer pane (1a) and an inner pane (1b) each inserted in a substantially rectangular frame (2, 2', 3), a foldable shade (4) being arranged on one of the frames (2, 2') and having a free movable end coupled with an operating unit (5, 5') which is provided for opening and closing said shade (4) and includes at least one shade (4) raising and lowering mechanism arranged in one of the longitudinal parts (2c, 2'c) of the frame (2, 2') as well as a drive mechanism (9, 9') mounted in the lower transverse part (2b, 2'b) of the frame (2, 2') and including a threaded spindle (19, 19'), **characterised in that** the threaded spindle (19, 19') is movable merely translationally and coupled with a transmission mechanism operating the at least one raising and lowering mechanism.

2. The aircraft window according to claim 1, **characterised in that** a raising and lowering mechanism is arranged in each of the longitudinal parts (2c, 2'c) of the frame (2, 2'), with the transmission mechanism operating both the raising and lowering mechanisms simultaneously.

3. The aircraft window according to claim 1 or 2, **characterised in that** the transmission mechanism comprises a transmission rod (15, 15') extending parallelly with the threaded spindle (19, 19') and firmly connected to drive wheels (8) of the raising and lowering mechanisms.

4. The aircraft window according to claim 3, **characterised in that** a gear, particularly of the single-stage cylindrical gear type, is provided between the threaded spindle (19) and the transmission rod (15).

5. The aircraft window according to claim 4, **characterised in that** the gear comprises a toothed wheel (17) operable by the threaded spindle (19) and a toothed wheel (16) firmly connected to the transmission rod (15).

6. The aircraft window according to claim 5. **characterised in that** that toothed wheel (17) of the gear, which is operable by the threaded spindle (19), is rotationally mounted on a bearing housing (18) stationarily arranged relative to the frame (2).

7. The aircraft window according to claim 3, **characterised in that** the threaded spindle (19') and the transmission rod (15') are coaxially arranged.

8. The aircraft window according to claim 7, **characterised in that** the threaded spindle (19') is designed as a hollow spindle through which the transmission rod (15') extends.

9. The aircraft window according to claim 7 or 8, **characterised in that** a sleeve (22) is arranged coaxially with the transmission rod (15'), which sleeve (22) is firmly connected to the rod (15') and comprises a threaded portion in engagement with the thread of the threaded spindle (19').

10. The aircraft window according to any one of claims 1 to 8, **characterised in that** a grip element (14, 14') is firmly connected to the threaded spindle (19, 19').

11. The aircraft window according to claim 10, **characterised in that** the grip element (14) is arranged on a carriage (12) which is displaceably mounted on the frame (2).

12. The aircraft window according to any one of claims 1 to 9, **characterised in that** the threaded spindle (19, 19') is movable by the aid of a controllable drive, for instance an electromotor.

## Revendications

1. Hublot modulaire d'avion muni d'une vitre externe et d'une vitre interne (1a, 1b), qui sont montées dans un cadre (2, 2', 3) sensiblement rectangulaire doté d'un ombrage (4) pliable disposé sur un des cadres (2, 2'), qui présente une extrémité mobile libre couplée à une unité d'actionnement (5, 5') conçue pour ouvrir et fermer l'ombrage (4), qui présente au moins un mécanisme de levage et d'abaissement pour l'ombrage (4), disposé dans l'une des parties longitudinales (2c, 2'c) du cadre (2, 2') et un mécanisme d'entraînement (9, 9') logé dans la partie transversale inférieure (2b, 2'b) du cadre (2, 2'), avec une tige filetée (19, 19'), **caractérisée en ce que** la tige filetée (19, 19') est uniquement mobile en translation et est couplée à un mécanisme de transmission qui actionne l'au moins un mécanisme de levage et d'abaissement.

2. Hublot d'avion selon la revendication 1, **caractérisée en ce qu'**un mécanisme de levage et d'abaissement est disposé dans chaque partie longitudinale (2c, 2'c) du cadre (2, 2'), le mécanisme de transmission actionnant simultanément les deux mécanismes de levage et d'abaissement.

3. Hublot d'avion selon la revendication 1 ou 2, **caractérisée en ce que** le mécanisme de transmission présente une barre de transmission (15, 15') s'étendant parallèlement à la tige filetée (19, 19'), qui est reliée de manière fixe aux roues d'entraînement (8) des mécanismes de levage et d'abaissement.

4. Hublot d'avion selon la revendication 3, **caractérisée en ce que**, un engrenage, plus particulièrement sous la forme d'un engrenage cylindrique à un étage est prévu entre la tige filetée (19) et la barre de transmission (15).

5. Hublot d'avion selon la revendication 4, **caractérisée en ce que** l'engrenage présente une roue dentée (17) actionnable par la tige filetée (19) et une roue dentée (16) reliée de manière fixe à la barre de transmission (15).

6. Hublot d'avion selon la revendication 5, **caractérisée en ce que** la roue dentée (17) de l'engrenage, actionnable par la tige filetée (19), est logée de manière rotative par rapport au logement de palier (18) fixe par rapport au cadre (2).

7. Hublot d'avion selon la revendication 3, **caractérisée en ce que** la tige filetée (19') et la barre de transmission (15') sont disposées de manière coaxiale.

8. Hublot d'avion selon la revendication 7, **caractérisée en ce que** la tige filetée (19') est conçue comme une tige creuse à travers laquelle passe la barre de transmission (15').

9. Hublot d'avion selon la revendication 7 ou 8, **caractérisée en ce qu'**un manchon (22) est disposé de manière coaxiale par rapport à la barre de transmission (15'), qui est relié de manière fixe à la barre (15') et qui présente une partie filetée qui est en engrènement avec le filetage de la tige filetée (19').

10. Hublot d'avion selon l'une quelconque des revendications 1 à 8, **caractérisée en ce qu'**un élément de préhension (14, 14') est relié de manière fixe à la tige filetée (19, 19').

11. Hublot d'avion selon la revendication 10, **caractérisée en ce que** l'élément de préhension (14) est disposé sur un chariot (12) logé de manière coulissante sur le cadre (2).

12. Hublot d'avion selon l'une quelconque des revendications 1 à 9, **caractérisée en ce que** la tige filetée (19, 19') est mobile au moyen d'un dispositif d'entraînement commandable, par exemple un moteur électrique.
